# EUROPEAN PATENT SPECIFICATION

(11) **EP 2 064 975 B1**
(45) Date of publication and mention of the grant of the patent: **29.09.2010**
(21) Application number: 08253826.5
(22) Date of filing: 27.11.2008
(51) Int. Cl.: A47J 27/21

(54) **Liquid heating vessels**
Heizgefäß für Flüssigkeiten
Récipient de réchauffement de liquides

(30) Priority: 27.11.2007 GB 0723192
(43) Date of publication of application: 03.06.2009
(73) Proprietor: STRIX LIMITED, Ronaldsway, Isle of Man IM9 2RG (GB)
(72) Inventor: Moughton, Colin Peter, Port St. Mary Isle of Man IM9 5LQ (GB)
(74) Representative: Samuels, Adrian James

(56) References cited:
- WO-A-2008/071983
- GB-A- 2 218 652
- NL-C2- 1 015 204

## Description

This invention relates to the reduction of noise in liquid heating vessels, particularly water boiling vessels.

The problem of noise arising during heating in water boiling vessels such as jugs and kettles has been acknowledged for some time. One proposal for overcoming this problem is described in the applicant's UK patent no. 2386532. In this proposal a noise reduction coating is provided on the water facing side of the heater plate of an underfloor heater system. The coating works by controlling the growth of bubbles at nucleation sites on the element surface through having adjacent regions with different surface tension properties.

Although the coatings described in GB 2386532 and subsequent developments of these coatings have been shown to be successful in reducing noise, the applicant has now appreciated that under some circumstances the amount of noise produced can still be too high. Specifically it has been found that as limescale builds up on the surface of the heater plate a critical amount of scale is reached. When this occurs a distinct whistle is produced. It is believed that the scale combines with the noise reduction coating to produce a critical condition whereby bubbles of steam form at or near the surface, expand, encounter a cooler layer of water just above the scale layer, and then collapse. The cycle then repeats in very rapid succession (typically 400 to 900 times per second).

Document NL1015204 also describes a water boiling vessel aiming at the reduction of noise.

The pressure inside a spherical bubble is inversely proportional to its radius. Thus very small bubbles have very high internal pressures. Bubble formation is initially enabled by surface imperfections such as crevices or particles of precipitated scale, and so the bubbles are not spherical. However the bubbles become approximately spherical as they grow. The growth reaches a critical point where the bubbles start to collapse as they condense on meeting a cooler layer of water and so their pressures rise rapidly (possibly reaching of the order of tens of thousands of atmospheres). As this happens at between 400 - 900 Hz, a loud whistle at those frequencies is generated. It has been found that the whistle is most prevalent at temperatures between 60 and 90 °C.

The present invention seeks to alleviate the aforementioned problem. When viewed from a first aspect the invention provides a liquid heating vessel comprising a heater forming at least part of the base of the vessel, the heater comprising a heater plate and an electric heating element attached to or formed on the underside of the heater plate, the vessel further comprising a disrupter member having a concave surface disposed above and extending over at least part of the upper surface of the heater plate opposite where the heating element is provided, said disrupter member being arranged in use to partially isolate a layer of liquid directly above the heating element, wherein the disrupter member comprises an array of apertures in the surface.

The disrupter member could be attached to or integral with a wall of the vessel. However this might be difficult to produce and has the disadvantage that it places the burden of properly locating it on the appliance manufacturers. In preferred embodiments therefore the disrupter member is attached to the heater. This is extremely convenient in that it does not require any special features to be formed on the vessel wall and so allows the heater assembly to be fitted into virtually any vessel in place of a conventional heater and does not limit design freedom.

When viewed from a second aspect therefore the invention provides a heater assembly for a liquid heating vessel comprising a heater for forming at least part of the base of a liquid heating vessel, said heater comprising a heater plate and an electric heating element attached to or formed on the underside of the heater plate, and a disrupter member attached to said heater so as to have a concave surface disposed above and extending over at least part of the upper surface of the heater plate opposite where the heating element is provided, so as in use to partially isolate a layer of liquid directly above the heating element, wherein the disrupter member comprises an array of apertures in the surface

In accordance with the invention therefore a partially isolated layer is created immediately above the element, where bubbles tend to form, and moreover the concave shape of the disrupter member surface acts to partially enclose and trap a volume of liquid underneath the member. During heating, the temperature of the isolated layer increases rapidly from ambient to the nucleate boiling phase, thus disrupting the passage through the critical phase in the temperature range of 60 to 80°C referred to above. The concave shape of the disrupter member helps to trap liquid in the layer above the heating element so as to ensure that it undergoes rapid heating and any bubbles formed do not come into contact with the cooler liquid above the disrupter member.

It has been found in practice that, as a result of the imperfections in the construction of the heater and the disrupter member, localized boiling occurs in a random manner in the isolated layer and chaotic disruption to water velocity at the surface is caused. It been found that this effect is advantageously increased by the concave shape of the surface. It is postulated that the concave surface directs rising convection currents in the liquid layer back down towards the heater, thereby increasing the pressure and turbulence underneath the member and disrupting the frequency and direction of bubble collapse on the heater surface. The overall result is that the whistle effect is drastically reduced; indeed it is eliminated completely in preferred embodiments.

A further advantage of the concave shape of the disrupter member is that it is inherently relatively stiffer than if it were planar. This can allow the member to be made thinner and reduce the material weight and cost involved. Furthermore the dimensional stability of the disrupter member is important for ensuring that the member does not distort in use, especially after many heating cycles.

It will be understood that the under-surface of the disrupter member can have any generally concave shape. For example, it need not be hemispherical in cross-section but could be in an inverted "U" , full or truncated "V" shape, or even an inverted "W" shape. The invention includes any surface which is higher in its central regions than at its peripheral regions, thereby defining a partially enclosed volume beneath the disrupter member. Furthermore it will be appreciated that there may be height variations across the surface, as long as the peripheral regions extend lower so as to define the edges of the enclosed volume.

In accordance with the invention in its broadest aspects the disrupter member may extend over just part of the heater surface above the element, but preferably the whole of the element is directly beneath the member. Thus where the element comprises a conventional horse-shoe shaped sheathed element the surface of the disrupter member would be arcuate. In preferred embodiments, for example, the disrupter member surface is annular. Preferably the concave surface of the disrupter member comprises downwardly extending walls at its radially inner and outer edges, which preferably are in an opposed relationship to the peripheral edges of the heating element. This helps to define a volume of liquid between the heating element and the disrupter member.

It should be appreciated however that the invention is not limited to horse-shoe shaped sheathed elements. It could apply equally to other sheathed elements or to thick-film heating elements in which a conductive track is applied to the underside of the heater plate.

The disrupter member surface is discontinuous. The discontinuity is manifested as an array of apertures in the surface. An apertured surface has been found to reduce the tendency for the vessel to 'knock' as bubbles coalesce and escape from beneath the disrupter member in a 'glugging' action. Such apertures could take any convenient size and shape - e.g. circular holes, radial slots, arcuate slots, diagonal slots etc. The apertures need not be the same size or shape and could be distributed evenly or unevenly; regularly or randomly. Such apertures may be particularly advantageous when the disrupter member has a concave shape because it may take a more pronounced 'glugging' action for bubbles to coalesce and escape from beneath the trapping umbrella of the concave surface. The width of the apertures may therefore be increased to allow for bubbles to escape through the disrupter member rather than 'glugging' out from underneath. The presence of such apertures may not affect the isolation of the liquid layer due to the overall enclosure formed by the concave shape. In a preferred embodiment the apertures comprise arcuate slots in the disrupter member surface.

As mentioned above, it is postulated that the whistle effect is reduced by randomizing the rapid local boiling in the isolated layer beneath the disrupter member. It has been found that the amplitude of the whistle can be attenuated further by providing the disrupter member with a roughened or textured surface. Moreover, this has been found to give an advantageous effect regardless of the shape of the disrupter member.

As explained above, the disrupter member could be attached to or integral with a wall of the vessel but it is preferable that the disrupter member is attached to the heater.

A textured, i.e. not smooth, surface finish may be produced in any suitable way. It could be an inherent result of the material used for the member. It could be achieved during manufacture of the member, for example by a moulding step. Alternatively it could be achieved by a post-processing step such as grit blasting. The member could even be coated to give the desired surface finish. Whatever technique is used, the resultant small-scale variations in the surface height have been found to interrupt the frequency and direction of bubble collapse so to prevent whistle generation. This represents an improvement over currently available disrupter members, which have a flat and smooth under-surface.

Some general features of the invention in accordance with all of its aspects will now be described.

It has been found that the height of the disrupter member surface above the upper surface of the heater plate, i.e. the depth of the isolated liquid layer, can also have an impact on the noise attenuation. If the liquid layer is not sufficiently deep then the bubbles do not have enough space to grow to a critical point of collapse and can escape intact, instead collapsing upon meeting cooler liquid beyond the disrupter member and generating a whistle at a regular frequency. The effect is more pronounced when the under-surface of the disrupter member is smooth rather being roughened or textured. However, if the disrupter member is spaced too far above the heater then the liquid layer is not isolated as effectively and cooler water can mix in and interrupt the rapid heating effect. It has been found preferable that at its lowest regions, e.g. at the peripheral edges of a concave disrupter member, the surface of the disrupter member is at a vertical height of no less than 6 mm above the heater plate. Preferably the disrupter member is located 6-8 mm above the heater plate. This feature has been found to be advantageous when combined with any of the above aspects of the invention.

Preferably the separation is less than 8mm. In some embodiments the separation is between 6 and 7 mm.

The disrupter member may be made of any suitable material - e.g. stainless steel. In some preferred embodiments a plastics material is used as it has the advantage of low cost and in the case of a thermoplastic, allows for ease of moulding. A glass reinforced plastics material is particularly preferred for its high stiffness and dimensional stability. Such properties are desirable as it beneficial that there any distortion of the disrupter member is minimised even after multiple heating cycles. Distortion of the member could change its shape and affect the height of the surface above the heater plate. In particular, if the member distorts such that the surface drops below a height of 6 mm above the heater plate then it has been found that a low level whistle can be generated. One preferred material is a glass fibre reinforced nylon such as Ultramid® A3EG6 (PA66-GF30) available from BASF.

The disrupter member disclosed herein is potentially of benefit in reducing noise in any heater which might be subject to scale. However, since the whistling phenomenon referred to in the introduction hereinabove is one which arises when a noise-reduction coating has been applied to the heater surface, the invention is especially applicable to such heaters. Thus in preferred embodiments the heater surface comprises a noise-reduction coating.

Preferably the noise-reduction coating is hydrophobic. In some embodiments the coating could comprise adjacent regions with different surface tension properties. In other embodiments the coating comprises a silicon-based material - e.g. Akzo-Nobel X10106. The coating could be continuous or discontinuous at the macro level, e.g. being striped; or at the micro level, e.g. by being cracked.

Certain preferred embodiments of the invention will now be described, by way of example only, with reference to the accompanying drawings in which:
Figs. 1 a and 1b are perspective views from above and below respectively of a heater plate for use with the present invention;
Fig. 2 is a perspective view of a disrupter member shown for reference only;
Fig. 3 is a cross-sectional view of an assembly of the disrupter member of Fig. 2 and heater of Fig. 1;
Fig. 4 is an enlarged cross-sectional view of the disrupter member of Fig. 2;
Fig. 5a is perspective view of a disrupter member of an embodiment in accordance with the invention;
Fig. 5b is a cross-sectional view of the same disrupter member; and
Figs. 6 to 8 show further embodiments of the ring part of a disrupter member in accordance with the invention.

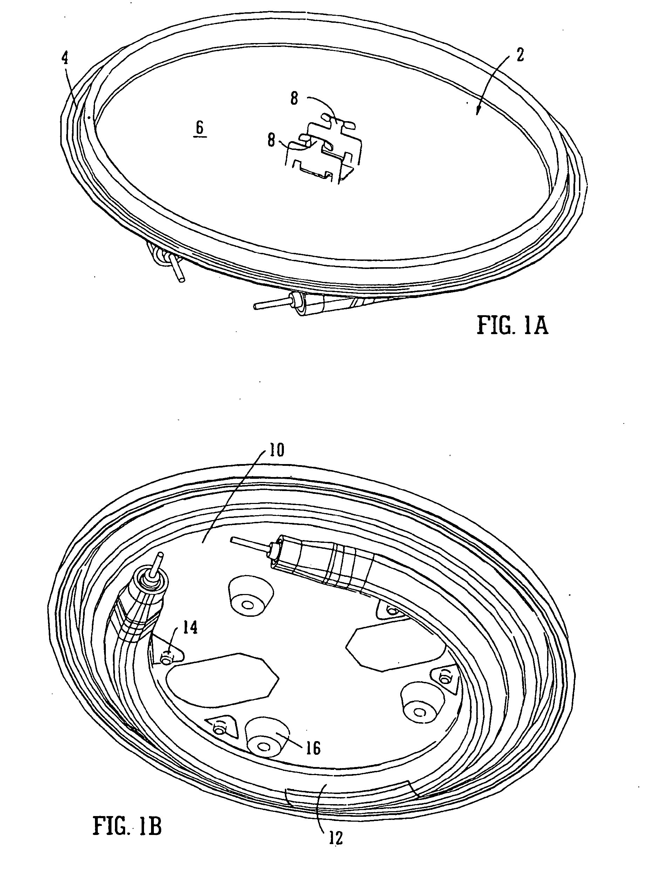

Figs. 1a and 1b show an underfloor heater with which the invention may be used. The heater comprises a thin (e.g. 0.5 to 1 mm) stainless steel heater plate 2 which is formed with a dished central portion and an upwardly open peripheral channel 4 in accordance with the applicant's Sure Seal sealing system which is described in greater detail in WO 96/18331. The heater plate 2 is completely conventional except in two respects. The first of these is that the central portion 6 of the plate is provided with a noise reduction coating in the form of a layer of Akzo-Nobel X10106 silicone-based coating which has been fired so as to produce a surface micro-cracking effect. The second non-conventional feature is a U-shaped bracket defining a pair of mounting tabs 8 and mounted by resistance welding it the bottom part of the bracket to the centre of the plate before the coating is applied.

On the underside of the heater plate 2, as may be seen in Fig. 1b, there is provided an aluminium heat diffuser plate 10 which is brazed onto the underside of the central portion 6. In turn a horseshoe-shaped sheathed electric heating element 12 is brazed onto the underside of the diffuser plate 10 as is conventional in the art. The diffuser plate 10 has four small bosses 14 for positioning an mounting a control unit (not shown). Three threaded bosses 16 fixed to the diffuser plate 10 are also provided as alternative mounting for a control.

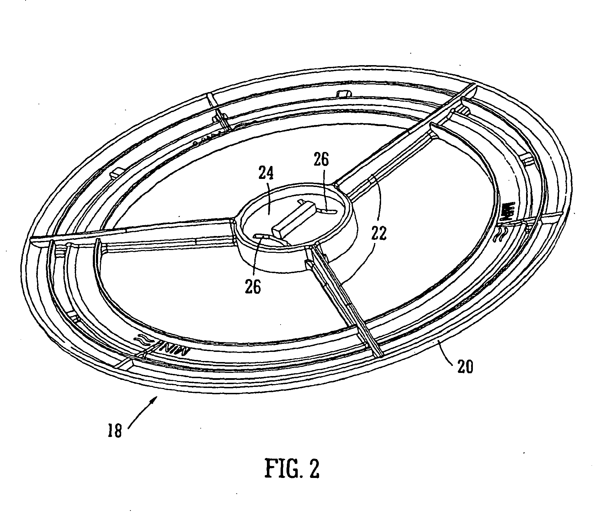

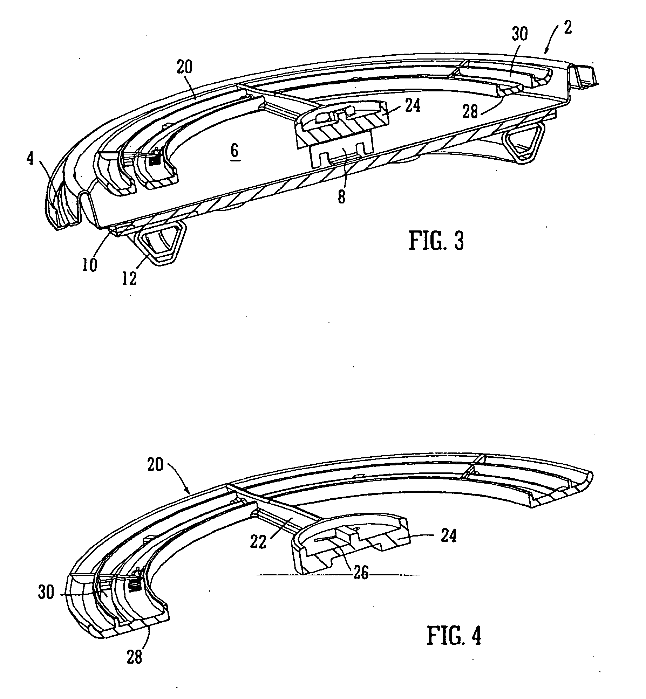

Figure 2 shows a disrupter member 18. The disrupter member 18 is moulded from a heat-resistant plastics material. It is formed with a main annular part 20 which is concentrically supported by three spokes 22 around a central hub 24. The hub 24 is formed with a pair of slots 26 in order to mount the disrupter member 18 to the heater plate 2 using the tabs 8, as is shown in Fig. 3. The under-surface 28 is generally planar in overall shape but has a textured surface (formed by a suitable texture on the moulding tool) which is not visible in the Figures.

Figure 3 is a sectional view through the assembled heater and disrupter member. It may be seen that the upwardly extending tabs 8 on the heater plate 2 are received in the corresponding slots 26 in the central hub 24. The tabs 8 are pre-formed to pass through the slots 26, and are then further formed together to grip the hub 24. This arrangement serves to support the disrupter member 18 above the surface 6 of the heater plate at a controlled separation. For example, the under-surface 28 of the annular part 20 of the disrupter member is spaced vertically from the heater plate surface 6 by a distance of between 6-8 mm in preferred embodiments.

It may also be observed from Figure 3 that the main annular under-surface 28 of the ring part 20 of the disrupter member is located vertically above the part of the heater surface 6 opposite where the heating element 12 is attached. The disrupter member ring 20 therefore extends over the part of the water contacting surface 6 of the heater which is most directly heated.

Since the heater plate 2 is a Sure Seal plate (i.e. it has an upwardly open peripheral channel 4) this may in use be fitted to a plastics vessel simply by clamping a downwardly depending portion of the vessel wall in the channel 4 exactly as is described in WO 96/18331. Alternatively, the heater plate 2 could instead be fitted into the vessel by means of an intermediate adapter ring,

As seen from Fig. 4, the upper surface of the ring part 20 is provided with a series of ridges and grooves, which are moulded into the ring 20 so as to increase its stiffness. A series of circumferentially spaced annular slots 30 is also formed in the ring 20, at the bottom of the central groove.

In operation the heating element 12 is energised causing it to heat rapidly. It may, for example, be rated at between 2 and 3 kW. The predominant thermal path from the element 12 is directly up through the heat diffuser plate 10 and the stainless steel heater plate 2 into the water. During heating, the noise reduction coating on the central part 6 of the heater surface will prevent the bubbles generated by inevitable nucleate boiling at the heater surface from growing too large and so it will minimise the background heating noise.

Also during heating there will be some convection of water as the water is heated causing it to reduce in density and so rise to be replaced by cooler water. However, this process is disrupted by the annular under-surface 28 of the disrupter member which is above the part of the heater surface directly above the element 12. As heated liquid rises up underneath the ring part 20 a volume will become trapped under the under-surface 128. The resulting partially isolated layer of water under the disrupter member 118 will heat rapidly to boiling and in particular will pass quickly through the temperature range of 60-90 °C thereby avoiding the very rapid growth and collapse of bubbles that has been found to be associated with a degree of scale build up on the heater surface. Instead, the roughened under-surface 128 of the disruptor member 118 causes localised boiling to occur in a random manner in the isolated layer, especially in the volume trapped under the ring part 20, and a chaotic disruption to water velocity. This prevents whistling from occurring, the bubbles instead coalescing into very large bubbles which periodically escape out from under the ring part 20 or through the slots 30 and rise to the surface of the water making relatively little sound.

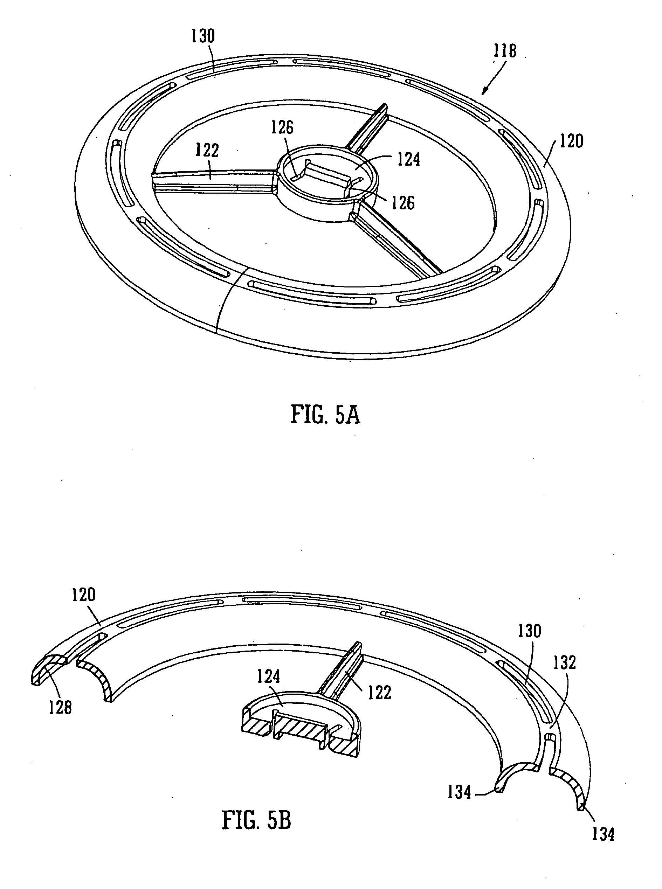

Figure 5 shows a disrupter member 118 according an embodiment of the present invention. Like the arrangement previously described, the disrupter member 118 has a main ring part 120 joined to a central hub 124 by three radial spokes 122. Annular slots 130 are evenly distributed around the central region 132 of the ring part 120. The ring 120 is about 20 mm wide and the slots 130 can be 2-4 mm wide.

The disrupter member 118 can be fastened above a heater in exactly the same manner as described above, using the slots 126 in the hub 124. However it will be noted that the disrupter member 118 according to this embodiment of the invention differs from the first disrupter member in terms of its shape. As seen from Fig. 5b, the under-surface 128 of the ring part 120 in this embodiment is concave in shape and defines a partially enclosed volume within its semi-toroidal outline. The effect of the shape of the disrupter member 118 on its performance is discussed below.

It should be understood that in use the disrupter member 118 is mounted inside a liquid heating vessel, e.g. attached to the heater plate 2 in the manner shown in Fig. 3.

In operation again the heating element 12 is energised causing it to heat rapidly and conduct heat directly up through the heat diffuser plate 10 and the stainless steel heater plate 2 into the water. During heating, the noise reduction coating on the central part 6 of the heater surface will prevent the bubbles generated by inevitable nucleate boiling at the heater surface from growing too large and so it will minimise the background heating noise.

As in the previous case convection of water takes place as the water is heated causing it to reduce in density and so rise to be replaced by cooler water, but this process is disrupted by the annular under-surface 128 of the disrupter member which is above the part of the heater surface directly above the element 12.

As heated liquid rises up underneath the ring part 120 a volume will become trapped under the semi-toroidal recess formed by the under-surface 128. The resulting partially isolated layer of water under the disrupter member 118 will heat rapidly to boiling and in particular will pass quickly through the temperature range of 60-90 °C thereby avoiding the very rapid growth and collapse of bubbles that has been found to be associated with a degree of scale build up on the heater surface. As before, the roughened under-surface 128 of the disruptor member 118 causes localised boiling to occur in a random manner in the isolated layer, especially in the volume trapped under the ring part 120, and a chaotic disruption to water velocity. In addition, the concave shape of the ring 120 directs rising convection currents in the liquid layer back down towards the heater, thereby increasing the pressure and turbulence underneath the disrupter member 118 and disrupting the frequency and direction of bubble collapse on the heater surface. This prevents whistling from occurring, the bubbles instead coalescing into very large bubbles which periodically escape out from under the ring part 120 or through the slots 130 and rise to the surface of the water making relatively little sound.

Although the disrupter member 118 is not shown in situ in a vessel, it will be understood that in use it is fixed at a height such that the lowest part of the under-surface 128 of the ring 120, i.e. the radially innermost and outermost peripheral edges 134 of the ring part 120, are at a height of at least 6 mm above the heater plate.

Although in the embodiment described above the under-surface of the disrupter member can be textured or roughened to improve the anti-whistling effect. However this is not essential and the concave shape of the disrupter member has been found to give an advantageous effect whether the surface is rough or smooth.

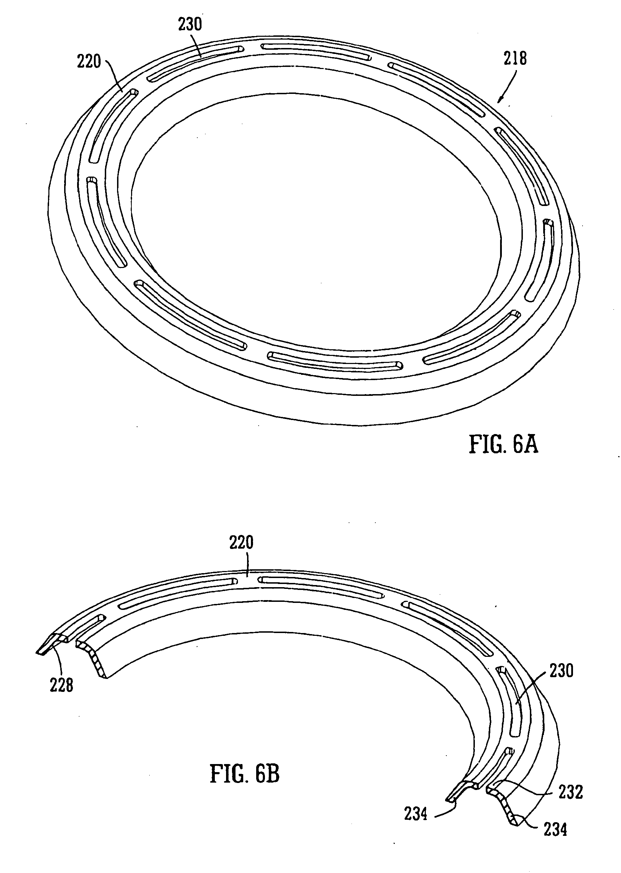

Figs. 6, 7 and 8 show alternative embodiments of the ring part of a disrupter member in accordance with the invention. In each case the ring part 220, 320, 420 of each disrupter member 218, 318, 418 has the same basic concave shape as the disrupter member 118 of the first embodiment but in each embodiment the actual cross-sectional shape of the ring part 220, 320, 420 is different. It will be noted that the spokes and hub have been omitted from these Figures but would in practice be provided in the same or a similar way to that shown in Figure 5. In each case the under-surface may be rough, textured or smooth.

In the embodiment shown in Figure 6, the ring part 220 has an inverted, truncated "V" cross-section, rather than a semi-circle. The under-surface 228 of the ring 220 is flat and horizontal at its central region 232 with peripheral walls 234 extending diagonally downwardly. Arcuate slots 230 are circumferentially spaced around the flat central region 232.

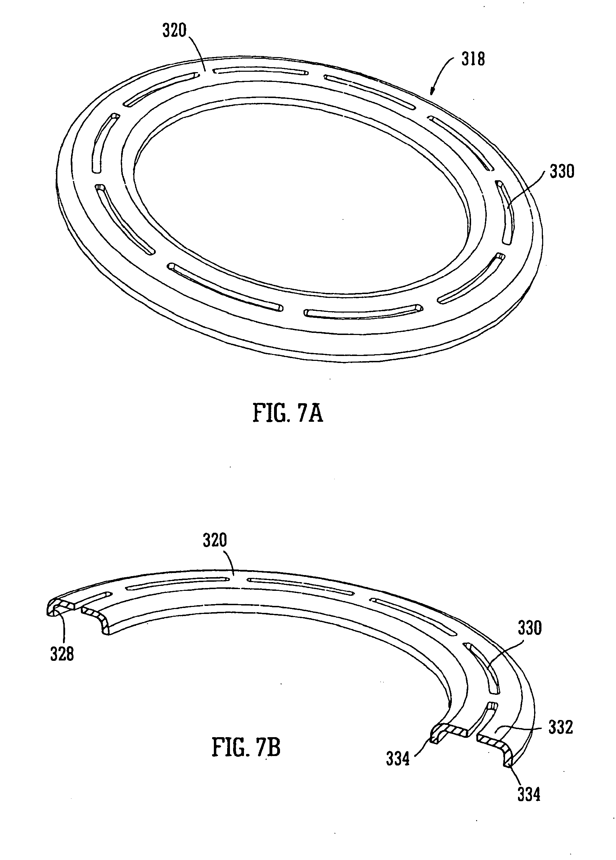

In the embodiment of Figure 7 the ring part 320 has, in cross-section, an overall flatter shape with the central region 332 extending horizontally across the width of the ring 320. However, downwardly extending peripheral walls 334 still define a partially enclosed volume beneath the under-surface 328 of the ring 320.

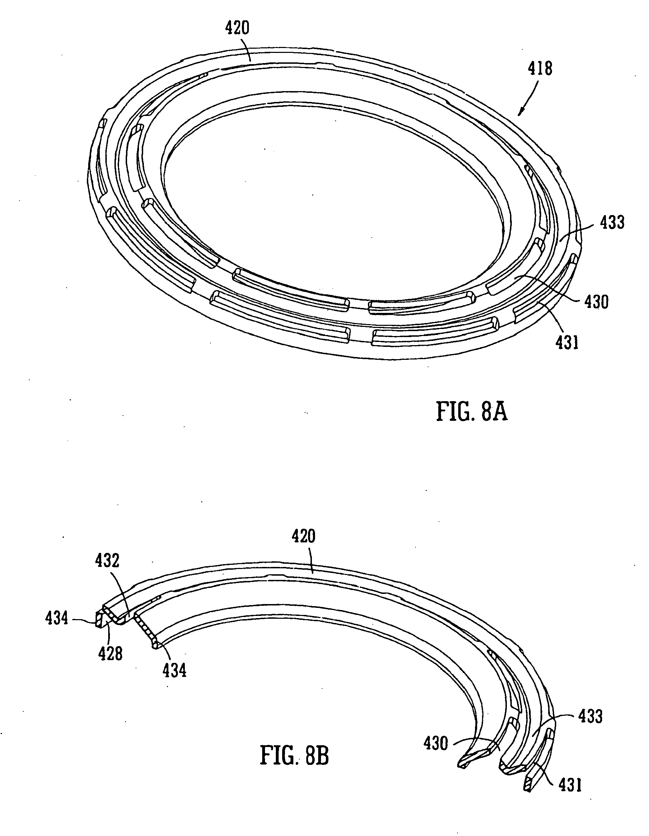

The embodiment of Figure 8 has a disrupter member 418 with an asymmetrical cross-sectional shape for the ring part 420. Similar to the embodiment of Figure 7, the ring has radially inner and outer peripheral walls 434 extending down towards the heater plate. However the central region 432 of the ring 420 between the outer walls 434 is wavy instead of flat, having an inverted "W" shape. The ring 420 therefore provides an asymmetrically concave-shaped under-surface 428. Furthermore the ring 420 is provided with two sets of circumferentially spaced apertures 430,431. The first set of apertures 430 passes through the central region 432 of the ring 420 while the second set 431, spaced radially outwardly by a groove 433, passes through the outer corner region where the under-surface 428 turns down into the peripheral walls 434. Even though the presence of apertures 430,431 gives the ring 420 a relatively open structure compared to the previous embodiments, it can still be effective in trapping and isolating a layer of liquid above the heater.

In all of the above embodiments, the presence of the apertures 130,230,330,430,431 enables steam to escape from under the corresponding annular surface 128,228,328,428, which can reduce the tendency for "glugging" to occur and the associated rocking of the kettle.

It will be appreciated by those skilled in the art that the invention is not limited to the exemplary embodiments described above and that many variations and modifications could be made. For example, the disrupter member need not be generally annular in shape, it may have any other convenient shape. Similarly, it may not extend around a complete revolution but might have a more limited angular extent. For example, it may not extend over the heater plate above the cold tails where there is no direct heating. Similarly, the disrupter member need not be attached to the heater but could instead by attached to the wall of the vessel or some other component. Furthermore, although the invention has been described in conjunction with a noise reduction coating, this is not considered to be essential and the invention may provide benefit in heaters where a noise reduction coating is not provided.

## Claims

1. A liquid heating vessel comprising a heater forming at least part of the base of the vessel, the heater comprising a heater plate (2) and an electric heating element (12) attached to or formed on the underside of the heater plate (2), the vessel further comprising a disrupter member (118; 218; 318; 418) having a concave surface disposed above and extending over at least part of the upper surface of the heater plate (2) opposite where the heating element (12) is provided, said disrupter member (118; 218; 318; 418) being arranged in use to partially isolate a layer of liquid directly above the heating element (12), wherein the disrupter member (118, 218, 318, 418) comprises an array of apertures (130, 230, 330, 430, 431) in the surface.

2. A heater assembly for a liquid heating vessel comprising:
a heater for forming at least part of the base of a liquid heating vessel, said heater comprising a heater plate (2) and an electric heating element (12) attached to or formed on the underside of the heater plate (2); and
a disrupter member (118; 218; 318; 418) attached to said heater so as to have a concave surface disposed above and extending over at least part of the upper surface of the heater plate (2) opposite where the heating element (12) is provided, so as in use to partially isolate a layer of liquid directly above the heating element (12), wherein the disrupter member (118, 218, 318, 418) comprises an array of apertures (130, 230, 330, 430, 431) in the surface.

3. A liquid heating vessel or heater assembly as claimed in any preceding claim wherein the surface of the disrupter member (118; 218; 318; 418) is roughened or textured.

4. A liquid heating vessel as claimed in any preceding claim wherein the disrupter member (118; 218; 318; 418) is attached to the heater.

5. A liquid heating vessel or heater assembly as claimed in any preceding claim wherein the disrupter member (118; 218; 318; 418) is positioned such that its surface at its lowest region is at a vertical height of no less than 6 mm, preferably between 6 and 8 mm, above the upper surface of the heater plate (2).

6. A liquid heating vessel or heater assembly as claimed in any preceding claim wherein the whole of the element (12) is directly beneath the disrupter member (118; 218; 318; 418).

7. A liquid heating vessel or heater assembly as claimed in any preceding claim wherein the disrupter member surface (120; 220; 320; 420) is annular.

8. A liquid heating vessel or heater assembly as claimed in claim 7 wherein the disrupter member surface (120; 220; 320; 420) is downwardly extending at its radially inner and outer edges.

9. A liquid heating vessel or heater assembly as claimed in claim 8 wherein the downwardly extending portions of the disrupter member surface (120; 220; 320; 420) do not extend below a vertical height of 6 mm above the upper surface of the heater plate.

10. A liquid heating vessel or heater assembly as claimed in any preceding claim wherein the heater surface comprises a noise-reduction coating.

11. A liquid heating vessel or heater assembly as claimed in claim 10 wherein said noise-reduction coating is hydrophobic.

## Patentansprüche

1. Flüssigkeitsheizgefäß mit einem Heizaggregat, der zumindest einen Teil des Bodens bzw. der Basis des Gefäßes bildet, wobei der Heizer eine Heizplatte (2) und ein elektrisches Heizelement (12), das an bzw. auf der Unterseite der Heizplatte (2) angebracht oder angeformt ist, aufweist, wobei das Gefäß ferner ein Unterbrechungselement (118; 218; 318; 418) mit einer konkaven Oberfläche aufweist, das bzw. die oberhalb zumindest eines Teils der Oberseite der Heizplatte (2) gegenüber dem Heizelement (12) vorgesehen ist und sich über diesen erstreckt, wobei das Unterbrechungselement (118; 218; 318; 418) eingerichtet ist, während der Verwendung eine direkt oberhalb des Heizelements (12) befindliche Flüssigkeitsschicht teilweise zu isolieren, wobei das Unterbrechungselement (118; 218; 318; 418) eine Anordnung von Öffnungen (130; 230; 330; 430; 431) in der Oberfläche aufweist.

2. Heizaggregatbaueinheit bzw. -anordnung für ein Flüssigkeitsheizgefäß, das aufweist:
ein Heizaggregat zum Bilden zumindest eines Teils des Bodens bzw. der Basis eines Flüssigkeitsheizgefäßes, wobei das Heizaggregat eine Heizplatte (2) und ein elektrisches Heizelement (12) aufweist, dass an der Unterseite der Heizplatte (2) angebracht oder angeformt ist; und
ein Unterbrechungselement (118; 218; 318; 418), das an dem Heizaggregat angebracht ist, um eine konkave Oberfläche aufzuweisen, die oberhalb zumindest eines Teils der Oberseite der Heizplatte (2) gegenüber dem Heizelement (12) vorgesehen ist und sich über diesen erstreckt, um während der Verwendung eine direkt oberhalb des Heizelements (12) befindliche Flüssigkeitsschicht teilweise zu isolieren, wobei das Unterbrechungselement (118; 218; 318; 418) eine Anordnung von Öffnungen (130, 230, 330, 430, 431) in der Oberfläche aufweist.

3. Flüssigkeitsheizgefäß oder Heizaggregatbaueinheit nach einem der vorstehenden Ansprüche, wobei die Oberfläche des Unterbrechungselements (118; 218; 318; 418) angeraut oder strukturiert ist.

4. Flüssigkeitsheizgefäß nach einem der vorstehenden Ansprüche, wobei das Unterbrechungselement (118; 218; 318; 418) an dem Heizaggregat angebracht ist.

5. Flüssigkeitsheizgefäß oder Heizaggregatbaueinheit nach einem der vorstehenden Ansprüche, wobei das Unterbrechungselement (118; 218; 318; 418) so positioniert ist, dass seine Oberfläche an seinem bzw. ihrem tiefsten Bereich eine vertikale Höhe von nicht weniger als 6 mm, bevorzugt zwischen 6 und 8 mm, oberhalb der Oberseite der Heizplatte (2) aufweist.

6. Flüssigkeitsheizgefäß oder Heizaggregatbaueinheit nach einem der vorstehenden Ansprüche, wobei das ganze Element (12) direkt unterhalb des Unterbrechungselements (118; 218; 318; 418) ist.

7. Flüssigkeitsheizgefäß oder Heizaggregatbaueinheit nach einem der vorstehenden Ansprüche, wobei die Unterbrechungselementoberfläche ringförmig ausgebildet ist.

8. Flüssigkeitsheizgefäß oder Heizaggregatbaueinheit nach Anspruch 7, wobei die Unterbrechungselementoberfläche (120; 220; 230; 420) sich an ihren radialen Innen- und Außenkanten nach unten erstreckt.

9. Flüssigkeitsheizgefäß oder Heizaggregatbaueinheit nach Anspruch 8, wobei die sich nach unten erstreckenden Abschnitte der Unterbrechungselementoberfläche (120; 220; 230; 420) sich nicht unterhalb einer vertikalen Höhe von 6 mm oberhalb der Oberseite der Heizplatte erstrecken.

10. Flüssigkeitsheizgefäß oder Heizaggregatbaueinheit nach einem der vorstehenden Ansprüche, wobei die Heizaggregatoberfläche eine geräuschreduzierende Beschichtung aufweist.

11. Flüssigkeitsheizgefäß oder Heizaggregatbaueinheit nach Anspruch 10, wobei die geräuschreduzierende Beschichtung hydrophob ist.

## Revendications

1. Récipient de chauffage de liquide comportant un dispositif de chauffage formant au moins une partie de la base du récipient, le dispositif de chauffage comportant une plaque de dispositif de chauffage (2) et un élément chauffant électrique (12) fixé à la surface inférieure de la plaque de dispositif de chauffage (2) ou formé sur celle-ci, le récipient comportant également un élément d'interruption (118 ; 218 ; 318 ; 418) ayant une surface concave disposée au-dessus d'au moins une partie de la surface supérieure de la plaque de dispositif de chauffage (2) et s'étendant sur celle-ci, à l'opposé de l'endroit où l'élément chauffant (12) est agencé, ledit élément d'interruption (118 ; 218 ; 318 ; 418) étant conçu pour, en utilisation, isoler partiellement une couche de liquide directement au-dessus de l'élément chauffant (12), dans lequel l'élément d'interruption (118 ; 218 ; 318 ; 418) comporte un réseau d'ouvertures (130, 230, 330, 430, 431) dans la surface.

2. Ensemble de chauffage pour un récipient de chauffage de liquide comportant :
un dispositif de chauffage pour former au moins une partie de la base d'un récipient de chauffage de liquide, ledit dispositif de chauffage comportant une plaque de dispositif de chauffage (2) et un élément chauffant électrique (12) fixé à la surface inférieure de la plaque de dispositif de chauffage (2) ou formé sur celle-ci ; et
un élément d'interruption (118 ; 218 ; 318 ; 418) fixé audit dispositif de chauffage de manière à avoir une surface concave disposée au-dessus d'au moins une partie de la surface supérieure de la plaque de dispositif de chauffage (2) et s'étendant sur celle-ci, à l'opposé de l'endroit où l'élément chauffant (12) est agencé, de manière à, en utilisation, isoler partiellement une couche de liquide directement au-dessus de l'élément chauffant (12), dans lequel l'élément d'interruption (118 ; 218 ; 318 ; 418) comporte un réseau d'ouvertures (130, 230, 330, 430, 431) dans la surface.

3. Récipient de chauffage de liquide ou ensemble de chauffage tel que revendiqué dans l'une quelconque des revendications précédentes, dans lequel la surface de l'élément d'interruption (118 ; 218 ; 318 ; 418) est rendue rugueuse ou texturée.

4. Récipient de chauffage de liquide tel que revendiqué dans l'une quelconque des revendications précédentes, dans lequel l'élément d'interruption (118 ; 218 ; 318 ; 418) est fixé au dispositif de chauffage.

5. Récipient de chauffage de liquide ou ensemble de chauffage tel que revendiqué dans l'une quelconque des revendications précédentes, dans lequel l'élément d'interruption (118 ; 218 ; 318 ; 418) est positionné de telle sorte que sa surface au niveau de sa zone la plus basse est à une hauteur verticale non inférieure à 6 mm, de préférence entre 6 et 8 mm, au-dessus de la surface supérieure de la plaque de dispositif de chauffage (2).

6. Récipient de chauffage de liquide ou ensemble de chauffage tel que revendiqué dans l'une quelconque des revendications précédentes, dans lequel la totalité des éléments (12) se situe directement sous l'élément d'interruption (118 ; 218 ; 318 ; 418).

7. Récipient de chauffage de liquide ou ensemble de chauffage tel que revendiqué dans l'une quelconque des revendications précédentes, dans lequel la surface d'élément d'interruption (120 ; 220 ; 320 ; 420) est annulaire.

8. Récipient de chauffage de liquide ou ensemble de chauffage tel que revendiqué dans la revendication 7, dans lequel la surface d'élément d'interruption (120 ; 220 ; 320 ; 420) s'étend vers le bas au niveau de ses bords radialement intérieur et extérieur.

9. Récipient de chauffage de liquide ou ensemble de chauffage tel que revendiqué dans la revendication 8, dans lequel les parties s'étendant vers le bas de la surface d'élément d'interruption (120 ; 220 ; 320 ; 420) ne s'étendent pas sous une hauteur verticale de 6 mm au-dessus de la surface supérieure de la plaque de dispositif de chauffage.

10. Récipient de chauffage de liquide ou ensemble de chauffage tel que revendiqué dans l'une quelconque des revendications précédentes, dans lequel la surface de dispositif de chauffage comporte un revêtement réducteur de bruit.

11. Récipient de chauffage de liquide ou ensemble de chauffage tel que revendiqué dans la revendication 10, dans lequel ledit revêtement réducteur de bruit est hydrophobe.
